# EUROPÄISCHE PATENTSCHRIFT

(11) **EP 3 607 213 B1**
(45) Veröffentlichungstag und Bekanntmachung des Hinweises auf die Patenterteilung: **25.06.2025**
(21) Anmeldenummer: 18720114.0
(22) Anmeldetag: 04.04.2018
(51) Int. Cl.: F16B 21/02

(54) **LOCHWANDSYSTEM UND BEFESTIGUNGSELEMENT**
PERFORATED WALL SYSTEM AND FASTENING ELEMENT
SYSTÈME DE PAROI PERFORÉE ET ÉLÉMENT DE FIXATION

(30) Priorität: 04.04.2017 DE 102017003278; 04.04.2017 DE 102017003277; 27.06.2017 DE 102017006052; 02.11.2017 DE 102017010206
(43) Veröffentlichungstag der Anmeldung: 12.02.2020
(73) Patentinhaber: Blum, Franz, 5020 Salzburg (AT); Göckel, Martin, 74925 Epfenbach (DE)
(72) Erfinder: Blum, Franz, 5020 Salzburg (AT); Ilg, Stefan, 89278 Nersingen (DE); Göckel, Martin, 74925 Epfenbach (DE)
(74) Vertreter: Maikowski & Ninnemann Patentanwälte Partnerschaft mbB
(86) Internationale Anmeldenummer: PCT/EP2018/058585
(87) Internationale Veröffentlichungsnummer: WO 2018/185149

(56) Entgegenhaltungen:
- WO-A1-03/095270
- WO-A1-2012/099212
- DE-A1- 102012 103 815
- DE-A1- 4 032 865
- DE-U1- 9 215 507
- DE-U1- 9 407 340
- FR-A1- 3 014 510
- GB-A- 972 995
- US-A- 4 457 650
- US-A1- 2009 074 539
- US-A1- 2015 023 759

## Beschreibung

Die vorgeschlagene Lösung betrifft ein Lochwandsystem sowie ein Befestigungselement für ein Lochwandsystem.

Ein Lochwandsystem, wie es beispielsweise aus der DE 20 2017 000 226 U1, GB 972 995 A oder US 4,457,650 A bekannt ist, weist eine Lochwand mit mehreren Lochwandöffnungen auf, an denen jeweils variabel ein Befestigungselement fixierbar ist. Die nach Position, Menge und Art variable Möglichkeit, die Lochwand für die Fixierung eines Befestigungselements zu nutzen erfordert bisher regelmäßig eine aufwendige Gestaltung der Lochwand selbst, damit hieran passende Befestigungselemente eingehängt oder anderweitig fixiert werden können. Vergleichbare Befestigungselemente sind ferner aus der FR 3 014 510 A, der DE 92 15 507 U, der DE 40 32 865 A und der DE 94 07 340 U bekannt.

Es besteht somit Bedarf für ein variables, leicht montierbares Lochwandsystem respektive ein entsprechendes leicht zu montierendes Befestigungselement für ein Lochwandsystem. Diese Aufgabe wird mit einem Lochwandsystem des Anspruchs 1 als auch mit einem Befestigungselement des Anspruchs 8 gelöst.

Ein vorgeschlagenes Lochwandsystem sieht dabei neben einer Lochwand, die eine Vorderseite und eine Rückseite und mehrere Lochwandöffnungen aufweist, mindestens ein Befestigungselement zur Befestigung an der Lochwand vor. Das Befestigungselement umfasst einen Elementkörper und ein an dem Elementkörper vorgesehenes Sperrelement zur lösbaren Verbindung des Befestigungselements mit der Lochwand an einer der Lochwandöffnungen der Lochwand. Das Sperrelement des vorgeschlagenen Lochwandsystems ragt für die Befestigung des Befestigungselements durch die Lochwandöffnung. Ferner sind das Sperrelement drehbar und gegen die Rückseite der Lochwand spannbar und Elementkörper gegen die Vorderseite der Lochwand spannbar, indem der an der Vorderseite der Lochwand zugängliche Elementkörper betätigt wird.

Eine Betätigung des an der Vorderseite der Lochwand zugänglichen Elementkörpers dient einem Verdrehen des Sperrelements, sodass das in die Lochwandöffnung eingesetzte und durch die Lochwandöffnung ragende Sperrelement die Lochwand an der Lochwandöffnung hintergreift. Mittels des Elementkörpers erfolgt ferner das Spannen des Sperrelements gegen die Rückseite der Lochwand und das Spannen des Elementkörpers gegen die Vorderseite der Lochwand.

Beispielsweise ist das Betätigungselement zur Verstellung des Sperrelement und des Elementkörpers relativ zueinander vorgesehen. Diese schließt beispielsweise ein, dass durch Drehung des Betätigungselements das Sperrelement und der Elementkörper des Befestigungselements einander angenähert werden, um zwischen dem Sperrelement und dem Elementkörper einen die Lochwandöffnung aufweisenden Abschnitt der Lochwand einzuspannen und damit das Befestigungselement an der Lochwand zu fixieren. Von der vorgeschlagenen Lösung ist ferner insbesondere eingeschlossen, dass eine Betätigung des Betätigungselements einer Betätigung des Elementkörpers nachfolgt, vorangeht oder beide Betätigungen miteinander kombiniert sind, um (a) das Sperrelement zu drehen und gegen die Rückseite der Lochwand zu spannen und (b) den Elementkörper gegen die Vorderseite Lochwand zu spannen.

Das Sperrelement hintergreift bei bestimmungsgemäß befestigtem Befestigungselement die Lochwand an der Lochwandöffnung. Das Sperrelement liegt dann in einer Verriegelungsposition vor und kann nicht ohne Verdrehen in eine Ausgangsposition wieder aus der Lochwandöffnung herausgezogen werden. Hierfür ist das Sperrelement aus der Verriegelungsposition erst um 90° (um eine Mittelachse des Befestigungselements) in die Ausgangsposition zu drehen, bevor das Sperrelement wieder aus der Lochwandöffnungen herausgezogen werden kann.

Erfindungsgemäß weist das Sperrelement einen in der Lochwandöffnung aufgenommenen Absatz auf, der das Sperrelement gegen eine Verdrehung in der Lochwandöffnung um mehr als 90°(oder einen anderen vorgegebenen Drehwinkel) sperrt. Dementsprechend kann das Sperrelement dann beispielsweise mit einem Abschnitt durch eine Lochwandöffnung hindurch ragen und, nach einer Verdrehung, die Lochwand an der Lochwandöffnung hintergreifen. Hierbei sperrt ein in der Lochwandöffnung aufgenommener Absatz des Sperrelements das Sperrelement gegen eine Verdrehung um mehr als 90°, sodass das bestimmungsgemäß in eine Lochwandöffnung eingesteckte Sperrelement letztlich nur um einen vorgegebenen Winkelbereich zwischen einer Ausgangsposition und einer Verriegelungsposition an der Lochwand schwenkbar ist. In der Verriegelungsposition hintergreift beispielsweise das Sperrelement die Lochwand an der Lochwandöffnung und wird dann anschließend durch Drehung des Elementkörpers, gegen die Rückseite der Lochwand gespannt.

Der die Verdrehung des Sperrelements in der Lochwandöffnung begrenzende Absatz weist eine augenförmige Querschnittsfläche mit zwei sich gegenüberliegenden Radien und zwei sich gegenüberliegenden Ecken auf. Die zwei sich gegenüberliegenden Radien definieren somit dann beispielsweise sich gegenüberliegende konvexe Rundungen, die an den sich gegenüberliegenden Ecken miteinander verbunden sind.

Erfindungsgemäß weist das Befestigungselement einen Gewindebolzen auf, der ein mit einem Innengewinde des Sperrelements in Eingriff stehendes Außengewinde aufweist. Der Gewindebolzen ist dem Elementkörper verbunden, sodass durch Drehung des Elementkörpers der Gewindebolzen drehbar ist und das Sperrelement dem Elementkörper angenähert oder von diesem weg verstellt werden kann. Durch die Annäherung des Sperrelements an den Elementkörper respektive eine Unterseite des Elementkörpers, kann das Sperrelement gegen die Rückseite der Lochwand und der Elementkörper gegen die Vorderseite der Lochwand gespannt werden.

An der Vorderseite der Lochwand kann ein Betätigungselement des Befestigungselements zugänglich sein. Das Betätigungselement ist beispielsweise formschlüssig mit dem Gewindebolzen verbunden. In einer Ausführungsvariante ist das Betätigungselement an dem Gewindebolzen schwenkbar gehalten.

Ergänzend kann das Betätigungselement über einen Abschnitt drehbar in einer Vertiefung oder Senkung des Elementkörpers gehalten sein. In einer hierauf basierenden Weiterbildung ist ein entsprechender drehbar in einer Vertiefung des Elementkörpers gehaltener Abschnitt des Betätigungselement beispielsweise als Drehbolzen(abschnitt) ausgeführt.

Der an dem Befestigungselement vorgesehene Gewindebolzen ist in einer Ausführungsvariante einerseits zusammen mit dem Sperrelement drehbar, damit das Sperrelement die Lochwand an der Lochwandöffnung hintergreifen kann (um das durch die Lochwandöffnung ragende Sperrelement dagegen zu sichern, wieder aus der Lochwandöffnung herausgezogen werden zu können). Andererseits ist der Gewindebolzen relativ zu dem Sperrelement drehbar, um das Sperrelement gegen die Rückseite der Lochwand und den Elementkörper gegen die Vorderseite der Lochwand zu spannen. Es ist somit mit dem Gewindebolzen ein zweiphasiger Bewegungsablauf realisierbar. So kann bei einer Montage des Befestigungselements an eine Lochwandöffnung über den Gewindebolzen zunächst das Sperrelement drehbar sein, um das in die Lochwandöffnung eingesteckte Sperrelement in eine Verriegelungsposition zu bringen, bevor ein anschließendes Weiterdrehen des Gewindebolzens das in seiner Verriegelungsposition verbleibende Sperrelement gegen die Rückseite der Lochwand und den Elementkörper gegen die Vorderseite der Lochwand spannt.

Zum Lösen einer Befestigung des Befestigungselements an der Lochwand kann ergänzend ein in eine Nut des Sperrelements eingreifender und an dem Gewindebolzen festgelegter Federring vorgesehen sein. Mittels des Federrings kann das Sperrelement, durch Drehen des Gewindebolzens ,(aus einer Verriegelungsposition) in eine Ausgangsposition mitgenommen werden, in der das Sperrelement von der Vorderseite der Lochwand aus aus der Lochwandöffnung gezogen werden kann.

Die Lochwandöffnung eines erfindungsgemäßen Lochwandsystems weist eine Langlochform auf.

In einer Ausführungsvariante weist der Elementkörper mehrere T-Nuten und/oder mehrere Bohrungen für die Befestigung eines Gegenstands und/oder eines Anbauteils an dem Elementkörper auf. An dem Elementkörper vorgesehene T-Nuten und/oder Bohrungen können somit zur Befestigung weiterer Komponenten des Lochwandsystems, insbesondere von Einrichtungsgegenständen, d.h. insbesondere Mobiliar, Anbauteilen und/oder Apparaturen des Lochwandsystems dienen. Über die mehreren T-Nuten und/oder die mehreren Bohrungen sind an dem Elementkörper somit bereits definierte Befestigungsstellen für weitere Komponenten des Lochwandsystems und/oder andere Anbauteile vorgegeben und ausgebildet.

Mehrere T-Nuten und mehrere Bohrungen können sich dabei an dem Elementkörper entlang eines Umfangs des Elementkörpers abwechseln. Beispielsweise ist eine Ausführungsvariante mit einem im Querschnitt sechseckigen Elementkörper vorgesehen, bei dem die Bohrungen im Bereich der Ecken des sechseckigen Querschnitts mit dazwischen liegenden T-Nuten vorgesehen sind.

In einer Ausführungsvariante, welche nicht Bestandteil der vorliegenden Erfindung ist, weist der Elementkörper an einer der Lochwand zugewandten Unterseite eine Aussparung auf, an der das Sperrelement von dem Elementkörper vorsteht. Die Aussparung ist gegenüber der Lochwand zurückgesetzt, wenn der Elementkörper bestimmungsgemäß an der Lochwand im Bereich einer Lochwandöffnung anliegt. Über die Aussparung an der Unterseite des Elementkörpers kann beispielsweise das Befestigungselement für Lochwände mit unterschiedlichen Wanddicken einsetzbar sein. So kann ein vorstehend erläuterter Absatz, der die Drehbarkeit des Sperrelements in einer Lochwandöffnung begrenzt, bei einer dünnwandigen Lochwand zumindest teilweise noch in der an der Unterseite des Elementkörpers vorgesehenen Aussparung aufgenommen sein, insbesondere wenn der Absatz nicht vollständig in die Lochwandöffnung passt. Ist z.B. die Wanddicke der Lochwand kleiner als die Höhe des Absatzes, kann der Absatz noch teilweise in der Aussparung an der Unterseite des Elementkörpers aufgenommen werden.

In einer Ausführungsvariante weist das Betätigungselement ein Bügelteil auf. Ein solches Bügelteil kann beispielsweise durch einen Schäkel gebildet sein oder einen Schäkel umfassen. Das Bügelteil kann alternativ oder ergänzend eine Ringmutter umfassen oder durch eine Ringmutter gebildet sein. Grundsätzlich kann das Bügelteil der Einhängung von Anbauteilen oder Gurten, insbesondere Spanngurten dienen. So kann ein vorgeschlagenes Lochwandsystem über mindestens ein Befestigungselement oder mehrere Befestigungselemente für eine Transportgutsicherung in einem Fahrzeug vorgesehen sein. Alternativ oder ergänzend können über das Lochwandsystem und das mindestens eine Befestigungselement Einrichtungsgegenstände an der Lochwand befestigbar sein.

In einer Ausführungsvariante, welche nicht Bestandteil der vorliegenden Erfindung ist, ist zwischen einem Abschnitt des Betätigungselements und einem Abschnitt des Elementkörpers mindestens ein elastisches Element vorgesehen, das das Betätigungselement gegen den Elementkörper vorspannt. Das mindestens eine elastische Element kann dabei beispielsweise sicherstellen, dass bei einer im Gebrauch an dem Betätigungselement angreifenden Kraft das Befestigungselement nicht unmittelbar zu einer weiteren Verspannung des Elementkörpers und des Sperrelements an der Lochwand oder umgekehrt zu einem Lösen der Befestigung des Befestigungselements an der Lochwand führt. Greift beispielsweise an dem Betätigungselement eine von einem Spanngurt aufgebrachte (Zurr-) Kraft an, kann über das mindestens eine elastische Element verhindert werden, dass, bei aus einer ungünstigen Richtung kommenden bzw. eine in eine entsprechende Richtung weisenden Kraft, sich das Befestigungselement extrem an der Lochwand festzieht und damit ein Lösen erheblich erschwert wird oder umgekehrt sich das Befestigungselement nicht mehr genug festzieht, wodurch das Befestigungselement nicht mehr genügend Halt an der Lochwand aufweisen kann.

Das mindestens eine elastische Element kann beispielsweise eine Tellerfeder umfassen. In einer hierauf basierenden Weiterbildung ist ein Federpaket mit mehreren aneinandergereihten Tellerfedern für das Vorspannen des Betätigungselements gegen den Elementkörper vorgesehen.

Erfindungsgemäß weist das Befestigungselement ein Anzeigeelement auf, an dem die Stellung des nach Einführen in die Lochwandöffnung an der Vorderseite der Lochwand nicht sichtbaren Sperrelements an der Vorderseite der Lochwand visuell und/oder haptisch erkennbar ist. Derart lässt sich für einen Anwender über das Anzeigeelement visuell oder haptisch erkennen, ob sich das Sperrelement beispielsweise in einer Ausgangsposition, in der das Sperrelement wieder aus der Lochwandöffnung entnommen werden kann, oder in einer Verriegelungsposition, in der das Sperrelement die Lochwand an der Lochwandöffnung (maximal) hintergreift, befindet.

Das Anzeigeelement kann beispielsweise einen Gewindebolzen mit Quermarkierung, eine Hammerkopfschraube oder eine Schlitzschraube umfassen.

An dem Elementkörper ist gemäß der vorliegenden Erfindung ferner ein elastisches Druckelement vorgesehen, das in einer Querrichtung, die quer seiner Längserstreckungsrichtung des Gewindebolzens (und einer damit zusammenfallenden Mittelachse des Befestigungselements) verläuft, auf ein Außengewinde des Gewindebolzens drückt. Durch das elastische Druckelement wird hierbei gewährleistet, dass bei einem Drehen des Elementkörpers das Sperrelement und das Anzeigeelement gedreht werden. Es ist damit über das elastische Druckelement sichergestellt, dass bei der Fixierung des Befestigungselements mithilfe des Sperrelements das Anzeigeelement ebenfalls gedreht wird, um hierüber die korrekte Position des Sperrelements anzuzeigen. In einer Weiterbildung kann an dem Elementkörper zusätzlich zu dem elastischen Druckelement eine Andruckschraube vorgesehen sein, mittels der die Kraft einstellbar ist, mit der das elastische Druckelement gegen das Außengewinde des Gewindebolzens drückt.

In einem Ausführungsbeispiel schließt das Anzeigeelement flächenbündig mit einer Stirnseite des Befestigungselements ab, an dem die mehreren Bohrungen vorgesehen sind. Ein solcher flächenbündiger Abschluss des Anzeigeelements bietet sich beispielsweise bei einem besonders flach bauenden Elementkörper an. Über das flächenbündig abschließende Anzeigeelement ist dann eine Befestigung weiterer Komponenten an dem Elementkörper über die Bohrungen, und insbesondere an der Stirnseite, nicht eingeschränkt. Gleichzeitig bleibt aber die aktuelle Position des Sperrelements visuell und/oder haptisch über das Anzeigeelement erkennbar. Beispielsweise kann in diesem Zusammenhang das Anzeigeelement als Schlitzschraube realisiert sein, deren Kopf flächenbündig mit einer Stirnseite des Elementkörpers abschließt.

In einer Ausführungsvariante ist an dem Befestigungselement ein Verbindungsstück vorgesehen, an dem insbesondere ein kompletter Spanngurtapparat befestigbar ist. Das an dem Befestigungselement vorgesehene Verbindungsstück ist somit insbesondere zur Befestigung eines kompletten Spanngurtapparats des Lochwandsystems eingerichtet und vorgesehen. Gleichzeitig kann ein solches Verbindungsstück aber auch zur Verbindung weiterer Komponenten und insbesondere weiterer Anbauteile ausgebildet und vorgesehen sein.

Grundsätzlich kann das Lochwandsystem einen Spanngurtapparat mit einem aufspulbaren Spanngurt umfassen. Ein solcher Spanngurtapparat kann beispielsweise einen mechanisch, elektrisch oder hydraulisch betriebenen Ratschenmechanismus aufweisen. Mithilfe des Befestigungselements kann somit eine entsprechender Spanngurtapparat ohne größeren Montageaufwand an der Lochwand festgelegt werden, sodass der Spanngurtapparat dann nachfolgend zur Sicherung von Transportgut an der Lochwand nutzbar ist.

Grundsätzlich kann die Lochwand einen Teil einer Deckenverkleidung und/oder einer Wandverkleidung eines Fahrzeugs bilden.

Ein weiterer Aspekt der vorgeschlagenen Lösung betrifft ein Befestigungselement zur Befestigung an einer Lochwand gemäß Anspruch 8.

Ausführungsvarianten eines vorgeschlagenen Befestigungselements können entsprechend den vorstehenden und nachstehenden Erläuterungen insbesondere in Ausführungsvarianten eines vorgeschlagenen Lochwandsystems zum Einsatz kommen. Dementsprechend gelten für Ausführungsvarianten eines vorgeschlagenen Lochwandsystems vorstehend und nachstehend erläuterte Vorteile und Merkmale auch für Ausführungsvarianten eines hierin verwendeten Befestigungselements und umgekehrt. Beispielsweise kann ein Befestigungselement zur Befestigung an einer Lochwand vorgesehen sein, die einen Teil einer Bodenverkleidung, einer Wandverkleidung oder einer Deckenverkleidung eines Fahrzeugs bildet. Alternativ oder ergänzend kann ein Befestigungselement zur Befestigung eines Bügelteils, eines Spanngurtapparates und/oder eines Einrichtungsgegenstands an der Lochwand vorgesehen sein.

Die beigefügten Figuren veranschaulichen exemplarisch mögliche Ausführungsvarianten.

Hierbei zeigen:
- Figuren 1 bis 7B: in unterschiedlichen Ansichten einen ersten Satz Ausführungsvarianten eines Lochwandsystems und eines Befestigungselements, wobei dieser erste Satz nicht unter den Schutzumfang der unabhängigen Ansprüche fällt;
- Figuren 8 bis 14: einen zweiten Satz von Ausführungsvarianten eines Lochwandsystems und eines Befestigungselements, wobei dieser Satz nicht unter den Schutzumfang der unabhängigen Ansprüche fällt;
- Figuren 15 bis 25: einen dritten Satz Ausführungsvarianten eines erfindungsgemäßenLochwandsystems und eines erfindungsgemäßenBefestigungselements;
- Figuren 26 bis 28: in verschiedenen Ansichten einen Spanngurtapparat für ein Lochwandsystem.

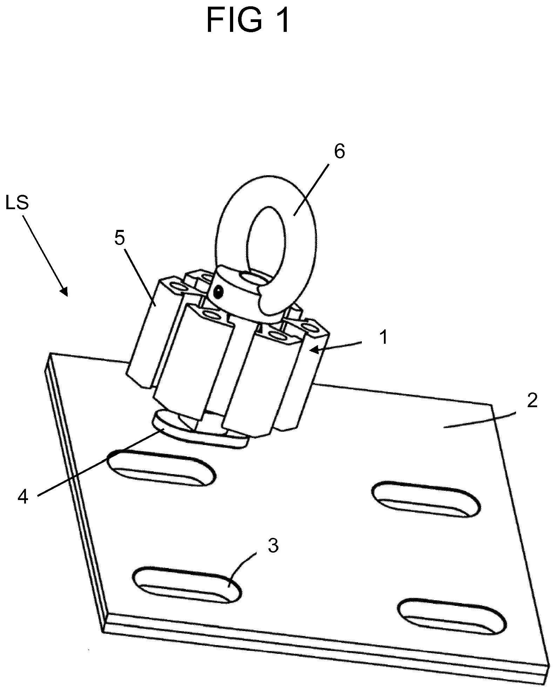

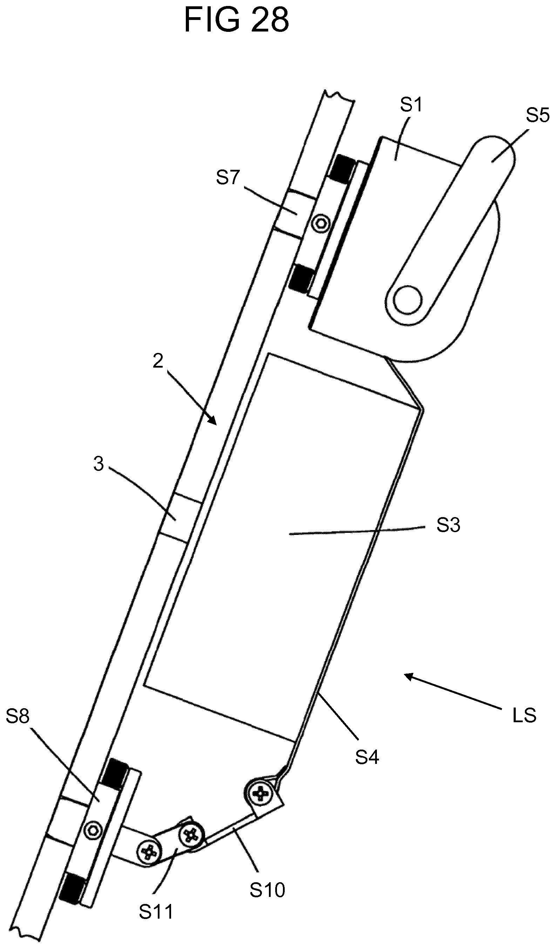

In den Figuren 1 bis 28 sind in unterschiedlichen Ansichten verschiedene Ausführungsvarianten eines Lochwandsystems LS mit Ausführungsvarianten eines Befestigungselements 1 dargestellt, mittels dem individuell Gegenstände insbesondere Ladegut und mobile Einrichtungsgegenstände, z.B. in Transportfahrzeugen, befestigt und fixiert werden können. Hierbei sind einzelne Aspekte der unterschiedlichen Ausführungsvarianten ohne Weiteres untereinander kombinierbar. Insbesondere sind Aspekte der drei Sätze von Ausführungsvarianten gemäß den Figuren 1 bis 7B, 8 bis 14 und 15 bis 25 miteinander kombinierbar und gegeneinander austauschbar, wobei die Ausführungsvarianten der Figuren 1 bis 14 nicht unter den Schutzumfang der unabhängigen Ansprüche fallen.

Die Figuren 1 bis 7B zeigen ein Befestigungselement 1 für ein Lochwandsysteme LS, bei dem Lochwandöffnungen 3 grundsätzlich geometrische Querschnitte aller Art aufweisen können und das Befestigungselement 1 in der Lochwandöffnung 3 fixiert werden kann, wie dies beispielsweise Figur 1 zeigt. Die Lochwand 2 kann z.B. in Transportfahrzeugen zum Einsatz kommen, wobei die Lochwand 2 aber nicht nur als Wandverkleidung, sondern auch als Boden- oder Deckenverkleidung eingesetzt werden kann.

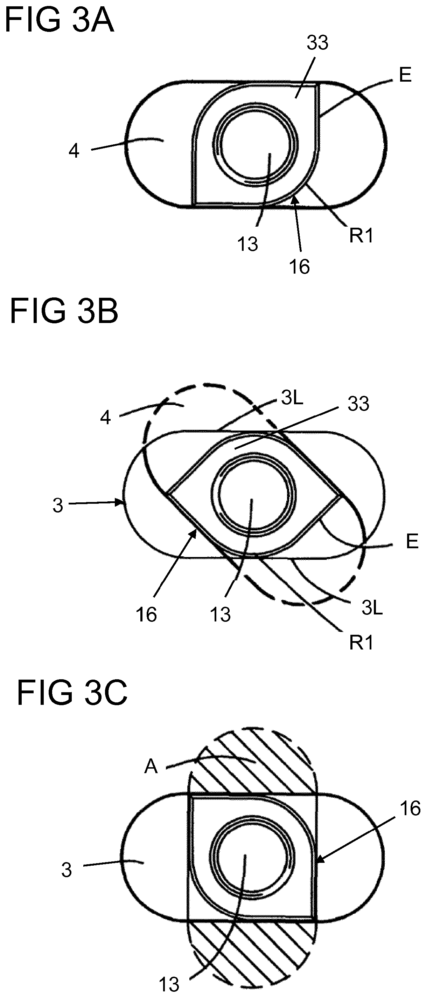

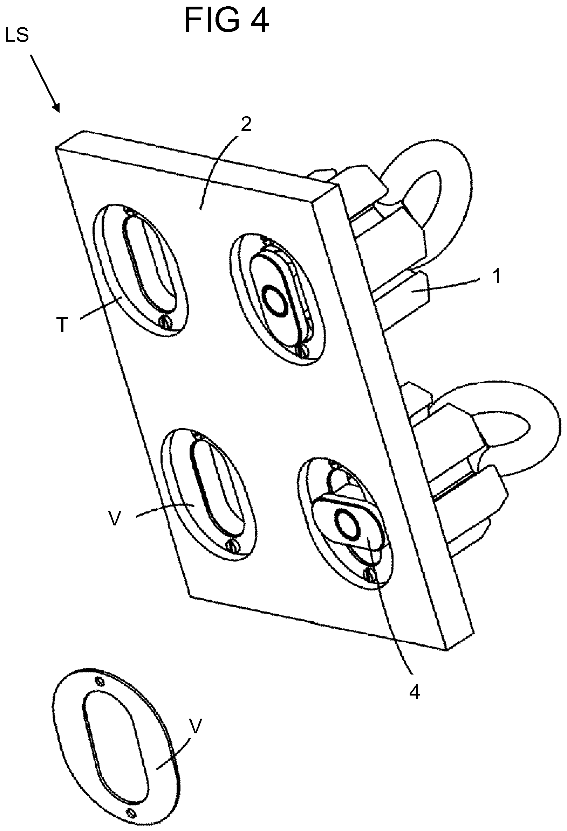

Das Befestigungselement 1 ist so gestaltet, dass durch einfaches Einsetzen und Verdrehen in die jeweilige Lochwandöffnung 3 eine feste und lösbare Verbindung zur Lochwand 2 hergestellt werden kann. Dabei weist das Befestigungselement 1 ein bewegliches Teil 4 auf, welches in Form und Abmessungen es ermöglicht, die Lochwandöffnung 3 zur Befestigung zu nutzen. Das bewegliche Teil, ein sogenanntes Sperrelement 4, passt formschlüssig in eine Lochwandöffnung 3 und kann nach Einführen in die Lochwandöffnung 3 in eine Position bewegt werden, die ein Herausziehen aus der Lochwandöffnung 3 nicht mehr zulässt (vgl. auch Figuren 3A-3C und 4). Die Bewegung des Sperrelements ist hierbei eine Verdrehung.

Das Sperrelement 4 weist einen geometrischen Querschnitt auf, der verschieden lange Seitenlängen aufweist, wie bei einem Rechteck oder einem Langloch. Exemplarisch weist das Sperrelement 4 einen Bereich zwischen den Längsseiten einer Langloch-Geometrie 3L auf, der durch zwei gegenüberliegende Radien R1 und zwei gegenüberliegende Ecken E, eine Verdrehung von maximal 90° und nur in eine Richtung zulässt, vgl. insbesondere Figuren 3A bis 3C. Das Befestigungselement 1 wird folglich mit seinem Sperrelement 4 so weit durch die Lochwand 2 hindurch gesteckt, dass ein Verschieben oder Verdrehen des Sperrelements 4 gegenüber der Geometrie der Lochwandöffnung 3, möglich wird. Durch Verdrehen um 90° wird dann verhindert, dass das Sperrelement 4 aus der Lochwandöffnung 3 herausgezogen werden kann.

Das Sperrelement 4 kann sich in einen Bereich verdrehen, der in einer Ausfräsung oder ausgefrästen Tasche T auf der Rückseite der Lochwand 2 liegt (vgl. Figur 4). Hierbei kann in die ausgefräste Tasche T ein Verstärkungsplättchen V eingebracht sein, welches das Material verstärkt und die Kräfte besser verteilt und aufnimmt. Das in die Tasche T eingelegte Verstärkungsplättchen V ist z.B. mit mindestens einer Schraube fixiert. Das Verstärkungsplättchen V verstärkt das Material der Lochwand 2 oder einen Lochboden, so dass sich das Sperrelement 4 an einer Stützfläche A, auch bei größerer Belastung nicht eindrücken kann und die Kräfte besser verteilt sind. Hierdurch ist eine höhere Stabilität gegeben.

Ein Elementkörper 5 des Befestigungselements 1, an dem das Sperrelement 4 vorgesehen ist, ist von einem Gewindebolzen 7 durchdrungen, der an einer Oberseite mit einer Ringmutter 6 mit Querstift 7A verbunden ist und an der Unterseite mit dem Sperrelement 4 in einer Gewindebohrung 13 verbunden ist. Mit anderen Worten, geht der Gewindebolzen 7 durch den Elementkörper 5 hindurch und endet an einem Betätigungselement, hier in Form der Ringmutter 6. Durch Drehen an der Ringmutter 6 dreht sich der Gewindebolzen 7 in das Sperrelement 4 hinein und spannt somit das Sperrelement 4 gegen die Rückseite der Lochwand 2 und den Elementkörper 5 gegen die Vorderseite der Lochwand 2 fest.

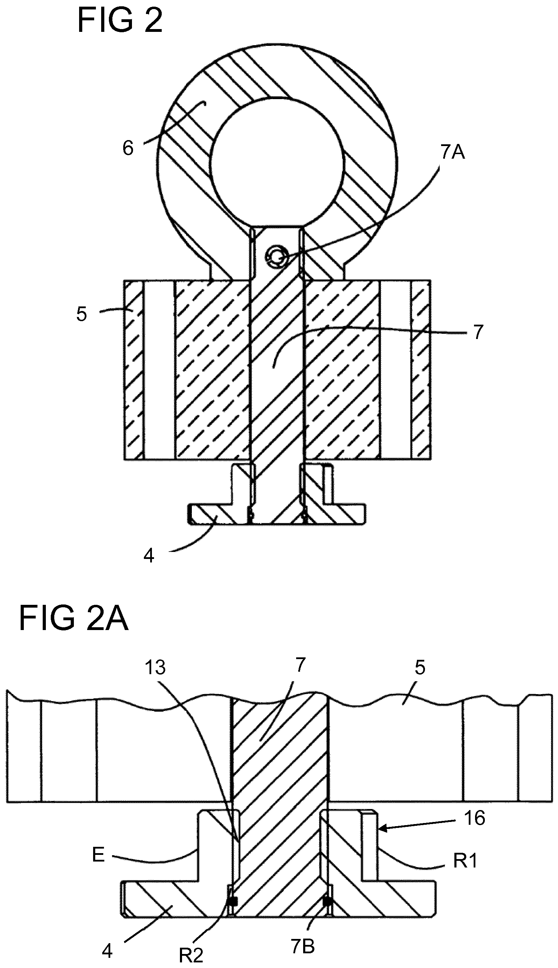

Der Gewindebolzen 7 weist ferner an einem Ende einen Federring 7B in einer Nut auf (vgl. insbesondere Figuren 2 und 2A), der das Sperrelement 4 bei einer Rückwerts-Drehbewegung, beim Lösen der Verbindung, sicher mitnimmt und auf eine Ausgangsposition bringt, die es ermöglicht, das Befestigungselement 1 von der Lochwand 2 zu entfernen (vgl. auch Figuren 3A bis 3C). Beim Lösen der Verbindung wird die Ringmutter 6 entgegengesetzt zu einer Eindrehrichtung gedreht. Die Spannung löst sich und das Sperrelement 4 dreht sich wieder in die Ausgangs- oder Einführposition. Der Federring 7B, welcher in der Nut im Gewindebolzen 7 eingesetzt ist, bewirkt, dass sich das Sperrelement 4 mit dem Gewindebolzen 7 mit dreht. Im Bereich des Federrings 7B ist die Gewindebohrung 13 des Sperrelements 4 vergrößert, da der Federring 7B einen größeren Durchmesser bzw. Radius R2 hat als der Gewindebolzen 7. Die mittige Gewindebohrung 13 des Sperrelements 4 weist in den dargestellten Ausführungsvarianten folglich einen Bereich auf, der knapp einem Außendurchmesser des in die Nut am Gewinde-Bolzen 7 eingesetzten Federrings 7B entspricht und dadurch nicht nur die Mitnahme des Sperrelements 4 bei der Rückwärtsbewegung bewirkt, sondern auch das Sperrelement 4 unverlierbar macht.

Das Befestigungselement 1 kann beispielsweise am Boden eingesetzt werden und als Bewegungssperrelement dienen. Beispielsweise kann relativ schweres Transportgut auf dem Boden eine Fahrzeugs, z.B. eines Transporters, abgestellt werden und danach gegen ein oder mehrere, jeweils in einer jeweiligen Lochwandöffnung 3 der am Boden befindlichen Lochwand 2 befestigten Befestigungselemente 1 geschoben werden. Auf der anderen Seite des Transportguts werden weitere Befestigungselemente 1 in Lochwandöffnungen 3 eingebracht. Jetzt ist es möglich, mittels Spanngurten das Transportgut festzuzurren. Beim Bremsen ist das Transportgut durch die Befestigungselemente 1, an denen das Transportgut ansteht, gegen ein Verrutschen gesichert.

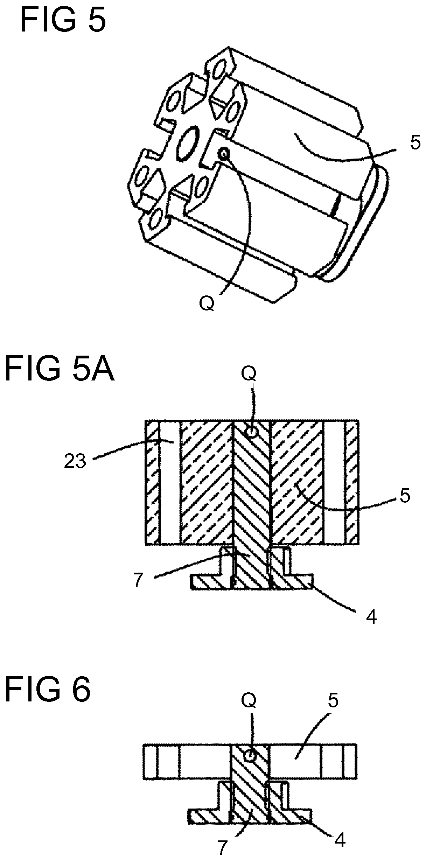

In mit den Figuren 5, 5A und 6 dargestellten Ausführungsvarianten weist ein Befestigungselement 1 keine Ringmutter 6, die mit dem Gewinde-Bolzen 7 durch einen Querstift 7A verbunden ist, auf. Vielmehr ist hier der Gewindebolzen 7 direkt mit dem Elementkörper 5 des Befestigungselements 1 mittels Querstift Q verbunden. Dadurch ist nach Einführung in die Lochwandöffnung 3 das Befestigungselement 1 direkt durch Verdrehen des Elementkörpers 5 fixierbar. Danach können weitere Gegenstände oder Adapterplatten mittels den (Gewinde-) Bohrungen 26 an dem Elementkörper 5 befestigt werden. Der Elementkörper 5 kann in beliebiger Länge ausgeführt werden und somit insbesondere dem Transportgut angepasst werden. So weist die Ausführungsvariante der Figur 6 exemplarisch keinen zylindrischen Elementkörper 5, sondern einen z.B. gegenüber der Variante der Figuren 5 und 5A flacheren, scheibenartigen Elementkörper 5 auf.

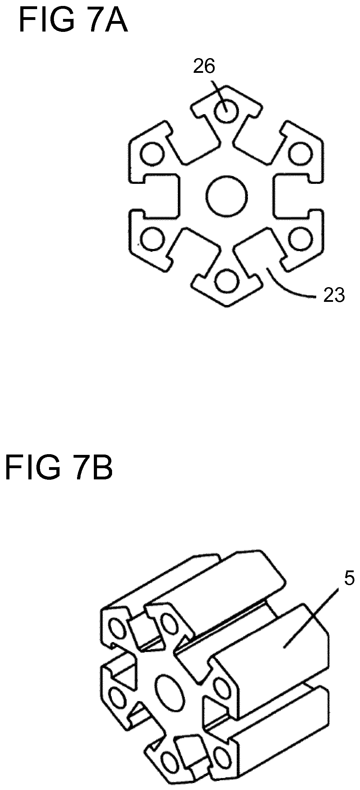

Grundsätzlich kann der in den Figuren 7A und 7B einzeln dargestellte Elementkörper 5 durch ein gezogenes Profil, z.B. ein Aluminiumprofil, gebildet sein, mit rundem oder eckigem Querschnitt, insbesondere mit sechseckigem Querschnitt. Der Elementkörper 5 und insbesondere ein solches Profil kann in Längsrichtung T-Nuten 23 und Bohrungen 26 an einer Stirnseite des Befestigungselements 1 aufweisen, an denen Adapterplatten, Erweiterungen und Anbauten angebracht werden können. Die T-Nuten 23 können hierbei mittels T-Nuten-Muttern oder T-Nuten-Steinen als Befestigungsmöglichkeit für zusätzliche Erweiterungen und Anbauten genutzt werden. Die Bohrungen 26 können im Übrigen auch mit Gewinden versehen sein.

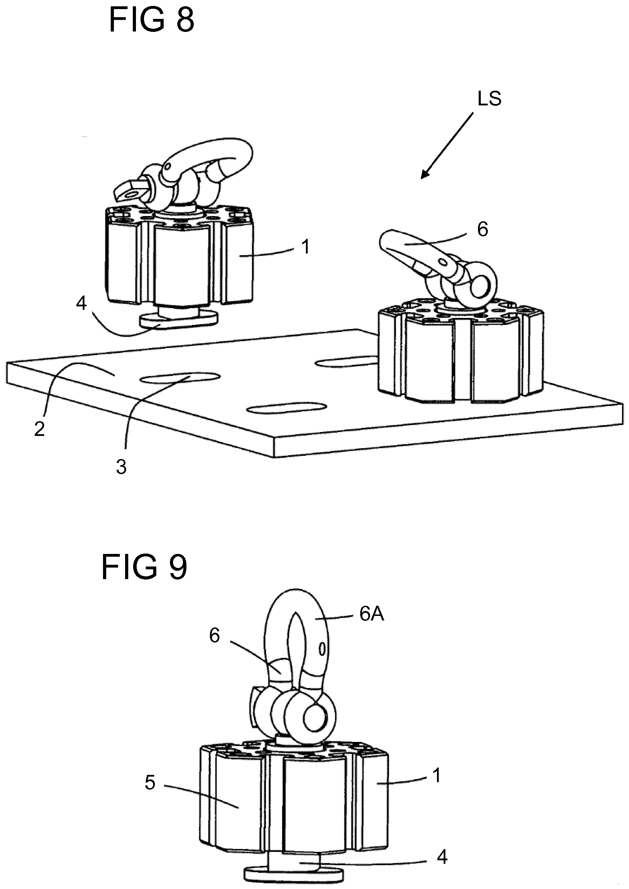

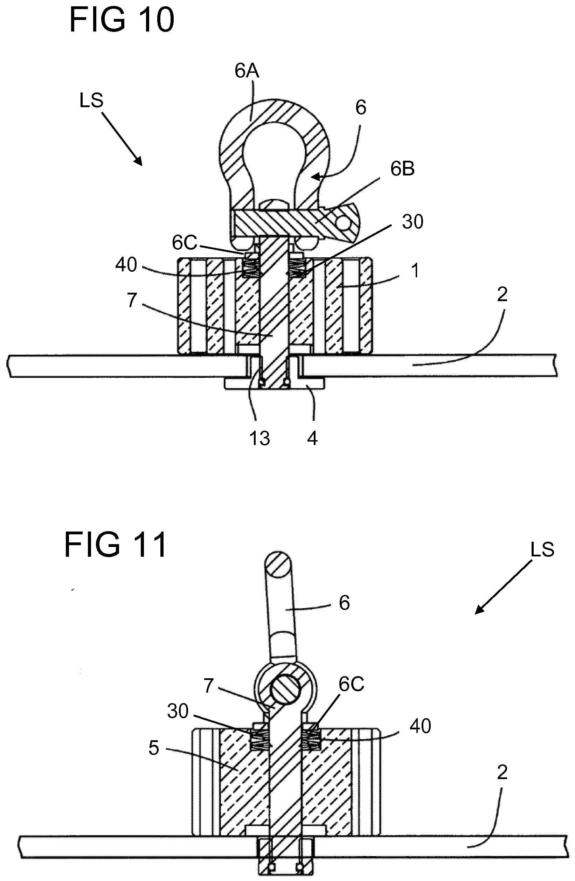

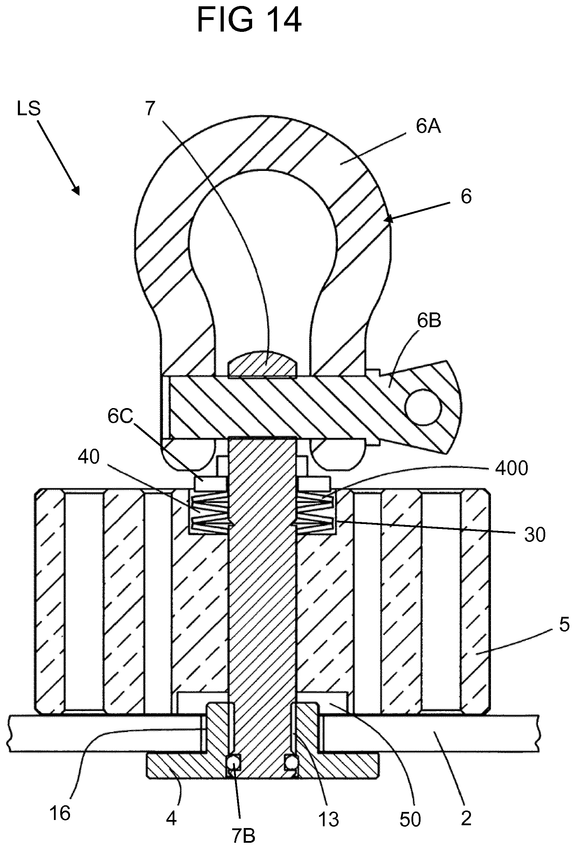

Bei den Ausführungsvarianten der Figuren 8 bis 14 ist der Gewindebolzen 7 als Augenschraube ausgeführt (vgl. insbesondere Figuren 10 und 14). Die Gewindebolzen 7 auch hierbei erneut durch den Elementkörper 5 hindurch und endet, an der Vorderseite des Befestigungselements 1, an einem Betätigungselement 6, das formschlüssig mit dem Gewindebolzen 7 verbunden ist (vgl. insbesondere Figur 11). Das Betätigungselement 6 kann eine Ring- oder Ösenform aufweisen, welche jeweils eine geschlossene oder teilweise offene Form haben kann.

Durch Drehen des Betätigungselements 6 dreht sich auch in dieser Ausführungsvariante der als Augenschraube ausgeführte Gewindebolzen 7 in das Sperrelement 4 hinein und spannt somit das Sperrelement 4 gegen die Rückseite der Lochwand 2 und den Elementkörper 5 gegen die Vorderseite der Lochwand 2 fest (vgl. z.B. Figur 10). Der Elementkörper 5 weist vorliegend an seiner Unterseite, an der das Sperrelement 4 vorsteht, eine Aussparung 50 auf, in die das Sperrelement 4 - mit seinem Absatz 16 - hineinragen kann, wenn die Dicke der Lochwand 2 kleiner ist als das Maß des Absatzes 16, wie insbesondere aus der Figur 14 ersichtlich ist.

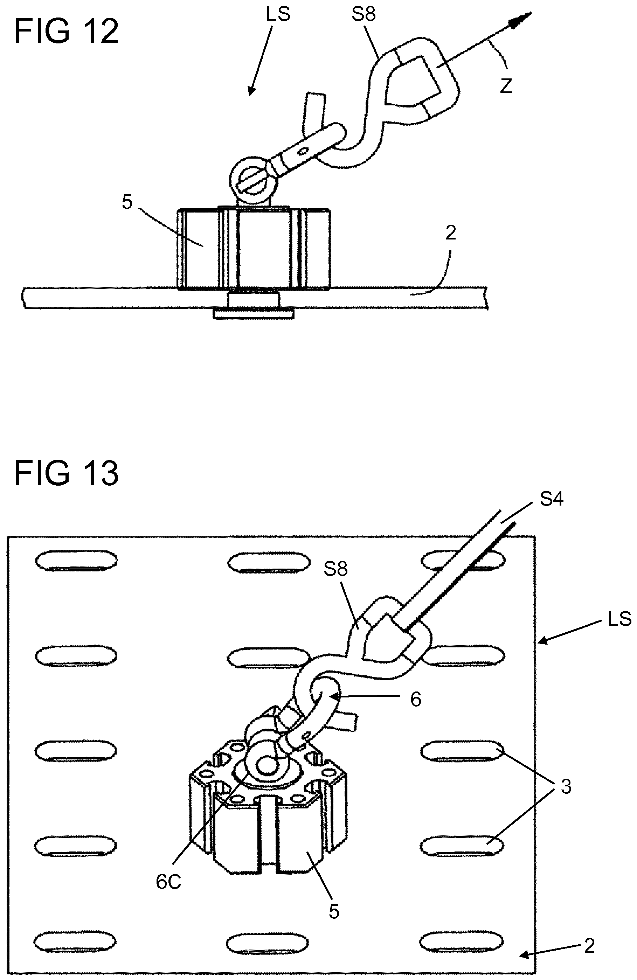

Das Betätigungselement 6 ist vorliegend in zwei Richtungen beweglich, sodass sich das Betätigungselement 6 an die Richtung anpassen kann, aus der beispielsweise eine Zurrkraft Z kommt, die von einem über eine Einhängevorrichtung S8 an dem Betätigungselement 6 eingehängten Spanngurt S4 ausgeübt wird (vgl. Figuren 12 und 13). Hierfür ist das Betätigungselement 6 beispielsweise mit einem handelsüblichen Schäkel versehen. Ein solcher (handelsüblicher) Schäkel weist ein Bügelteil 6A auf und ist durch einen Querbolzen 6B mit der Augenschraube verbunden, sodass der Schäkel bei Bedarf schnell und einfach ausgetauscht werden kann (vgl. z.B. Figuren 10, 11 und 14).

Sollte nun die Zurrkraft Z) aus einer ,ungünstigen' Richtung kommen, ist es möglich, dass sich das Befestigungselement 1 extrem an der Lochwand 2 festzieht und dadurch ein Lösen sehr erschwert wird oder sich nicht genug festzieht und dadurch nicht genügend Halt aufweist. Hierfür ist ein elastisches Element, z.B. in Form einer elastische Baugruppe, insbesondere in Form eines Federpakets 40 bestehend aus einer oder mehreren Tellerfedern 400 vorgesehen, welches über eine eingestellten Vorspannung und genügend Anzugstrecke verfügt, sodass nach dem Festziehen innerhalb einer vollen Umdrehung die optimale Richtung bei optimalem Halt einstellbar ist (vgl. Figur 13). Durch die Anzahl und Anordnung der Tellerfedern 400 ist hierbei eine bestimmte Anzugskraft und eine bestimmte elastische Anzugsstrecke voreinstellbar.

Das Federpaket 40 befindet sich z.B. in einer Vertiefung oder Senkung 30 auf der Oberseite des Elementkörpers 5 auf der (Längs-) Achse des Gewindebolzens und ist daher so gut wie nicht sichtbar (vgl. insbesondere Figur 14). Das Federpaket 40 stützt sich einerseits in der Vertiefung 30 und andererseits an einem dem Betätigungselement 6 zugeordneten Stützabschnitt 6C ab.

Ein Befestigungselement der Figuren 8 bis 14 kann somit in eine Lochwandöffnungen 3 eingeführt werden, wobei sich durch anschließendes Verdrehen des Betätigungselements 6 das Sperrelement 4 und der Elementkörper 5 jeweils gegen die Lochwand 2 festziehen können. Das elastisches Element 40 des Befestigungselements der Figuren 8 bis 14 verfügt dabei über eine eingestellte Vorspannung und genügend Anziehstrecke, sodass sich innerhalb einer vollen Umdrehung des Betätigungselement 6 eine nahezu gleichbleibende Anzugskraft einstellt.

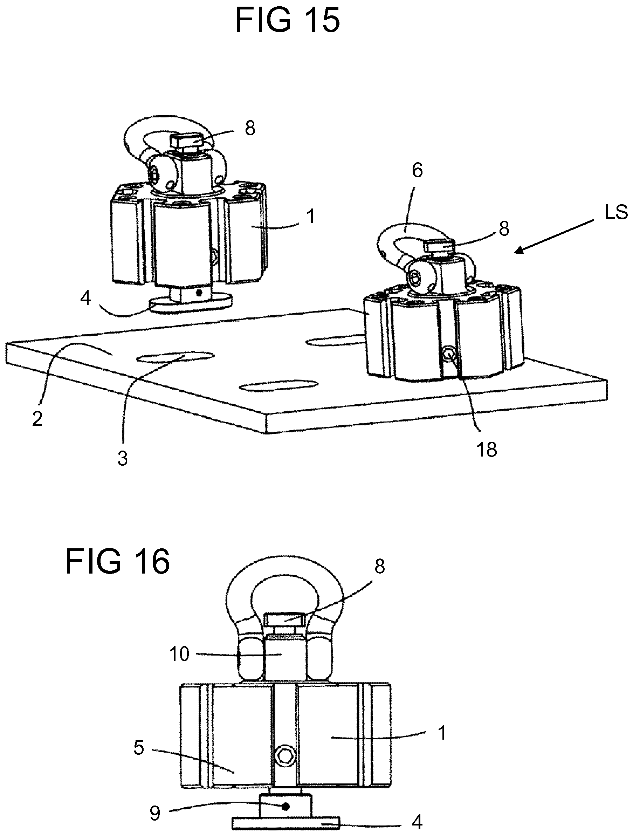

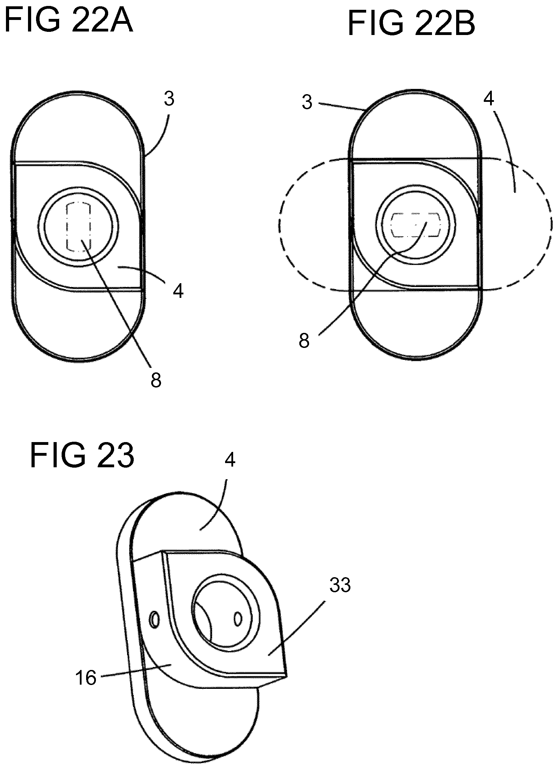

Bei den erfindungsgemäßen Ausführungsvarianten der Figuren 15 bis 25 ist ein Befestigungselement 1 mit einem Anzeigeelement versehen. Mithilfe eines solchen Anzeigeelements kann jederzeit nach Einführen des Sperrelements 4 in eine Lochwandöffnung 3 die genaue Position des Sperrelements 4 zur Lochwandöffnung 3 für den Anwender sichtbar und ggf. auch im Dunklen durch Anfassen mit einem Finger fühlbar sein. Dabei ist insbesondere für einen Anwender an der Vorderseite der Lochwand 2 erkennbar, ob sich das Sperrelement 4 in der optimalen Verriegelungsposition befindet, also diejenigen Position, bei der die Längsseite des Sperrelements 4 senkrecht zur Langseite der Lochwandöffnung 3 steht (vgl. z.B. Fig. 22A und 22B).

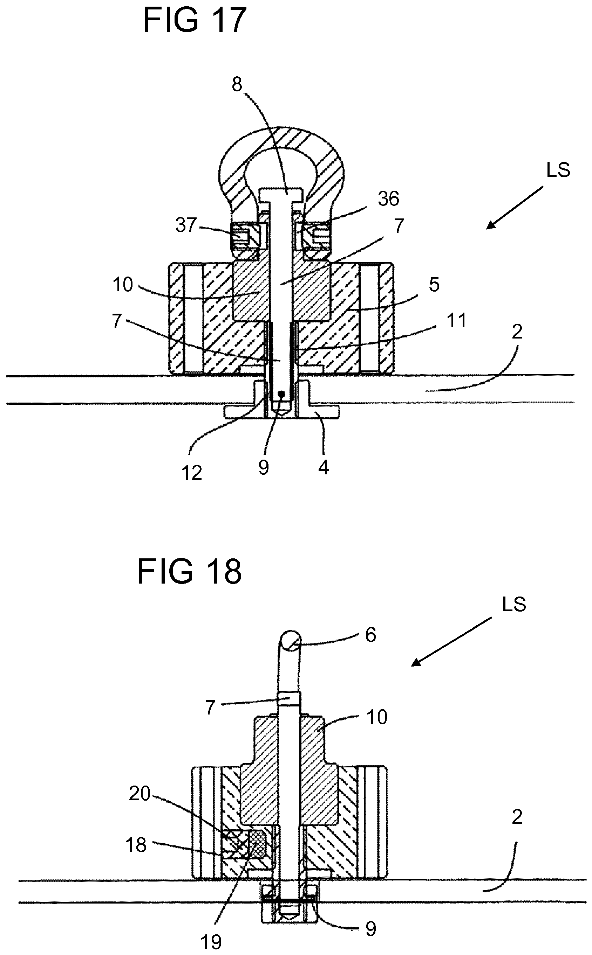

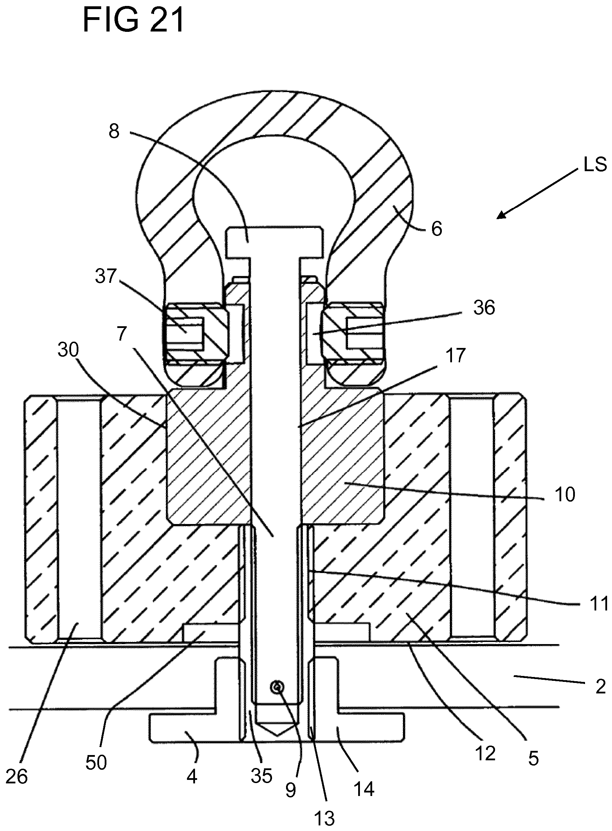

Das Sperrelement 4 weist auch in den Ausführungsvarianten der Figuren 15 bis 25 eine mittig angeordnete Gewindebohrung 13 auf (vgl. z.B. Figuren 17 und 21). In diese Gewindebohrung 13 greift vorliegt eine Gewindehülse 35 ein, in der wiederum ein kleinerer Gewindebolzen mit integriertem Anzeigeelement, z.B. eine Gewindeschraube mit Hammerkopf, mithin eine Hammerkopfschraube 7, eingreift. Diese Hammerkopfschraube ist fest mit der Gewindehülse 35 und fest mit dem Sperrelement 4, insbesondere durch einen Querstift 9 verbunden (vgl. insbesondere Figuren 17, 18 und 21). Dabei sind die Langseiten 14 des Sperrelements 4 und die Langseiten 8 eines Hammerkopfs der Hammerkopfschraube 7 vor dem Fixieren, insbesondere dem Verstiften in eine parallele Position gebracht worden; vgl. Figur 17. Die Hammerkopfschraube 7 geht durch den Elementkörper 5 und einen Drehbolzen 10 hindurch, wobei der Elementkörper 5 eine zentrale Gewindebohrung 11 aufweist und der Drehbolzen 10 eine Durchgangsbohrung 17.

Die genaue Verdrehstellung des Sperrelements 4, welches man nach Einführen in die Lochwandöffnung 3 nicht mehr sieht, weil der Elementkörper 5 auf der Vorderseite der Lochwand 2 davor angeordnet ist, kann an der Stellung des Hammerkopfes der Hammerkopfschraube 7, der gut sichtbar ist, abgelesen werden, wie dies z.B. die Figuren 15, 16 und 21 veranschaulichen.

Der Elementkörper 5 entsprechend der Figur 18 weist eine weitere Gewindebohrung 18 auf, die in einer Position quer zur zentralen Gewindebohrung 11, insbesondere senkrecht zu dieser, positioniert ist. In dieser weiteren Gewindebohrung 18 sind ein elastisches Druckelement 19, insbesondere ein Kunststoffteil, und eine Andruckschraube 20 eingebaut. Das elastische Druckelement 19 wird durch variables Anziehen der Andruckschraube 20 auf den Gewindebolzen 7 gedrückt und bewirkt dadurch, dass beim Verdrehen des Elementkörpers 5 die Gewindehülse 35 samt Hammerkopfschraube 7 und somit das Sperrelement 4 solange mitgedreht wird, bis dieses an der Langseite der Lochwandöffnung 3 ansteht. Das Sperrelement 4 hat bedingt durch die augenförmige Geometrie 33 des Absatzes 16 auch hier eine maximale Drehbewegungsfreiheit von 90° (vgl. z.B. Figuren 22A und 22B). Der Elementkörper 5 kann weiter gegen die Lochwand 2 gedreht werden, da das elastische Druckelement 19 gegen die Gewindehülse 35 drückt, wodurch nur das Drehen schwergängig wirkt.

Wenn eine Anliegefläche 12 an der Unterseite des Elementkörpers 5 an der Lochwand 2 ansteht und das Sperrelement 4 gegen die Rückseite der Lochwand 2 gedrückt wird, sitzt das gesamte Befestigungselement 1 fest an der Lochwand 2. Durch den Absatz 16 des Sperrelements 4 und die Aussparung 50 im Zentrum der Anliegefläche 12 des Elementkörpers 5 werden ferner auch in den Ausführungsvarianten der Figuren 15 bis 25 verschiedene Dicken der Lochwand 2 ausgeglichen, insbesondere wenn das Dickenmaß der Lochwand 2 kleiner ist als das (Höhen-)Maß des Absatz 16 des Sperrelements 4. Eine ausreichende Klemmung kann somit stets gewährleistet werden.

Auch der Elementkörper 5 der Ausführungsvarianten der Figuren 15 bis 25 kann aus einem gezogenen Aluminiumprofil 22 bestehen, welches an den Seiten mit T-Nuten 23 ausgestattet ist. An diesen T-Nuten 23 können z.B. mittels T-Nuten-Steinen weitere Bauelemente befestigt werden. Ebenso kann der Elementkörper 5 an den Stirnseiten lochförmige Aussparungen, insbesondere Bohrungen 26 aufweisen, die parallel zur Mittelachse und somit zur Hammerkopfschraube 7. Diese Bohrungen 26 können mit Gewinde versehen werden und somit zur Befestigung von weiteren Bauelementen dienen.

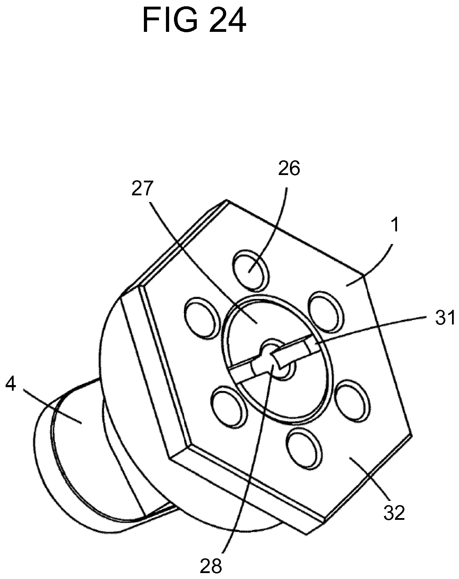

Der Element-Körper 5 kann auch kleiner ausgeführt sein. Ein sogenanntes Mini-Befestigungselement 1 zeigt hierbei exemplarisch - in Ergänzung zur Figur 6 - die Figur 24. Das Befestigungselement 1 der Figur 24 weist ebenfalls (Gewinde-) Bohrungen 26 auf, an denen Bauelemente aller Art befestigt werden können. Um eine durchgehende Fläche zu erzeugen, kommt in diesem Fall statt einer Hammerkopfschraube 7 ein Gewindebolzen mit Quermarkierung, insbesondere eine Schlitzschraube 27 zum Einsatz. Die Schlitzschraube 27 ist mit dem Sperrelement 4 so verbunden oder verstiftet, dass die Stellung einer Quermarkierung in Form eines Schlitzes 31 der Schlitzschraube 27 die Stellung des Sperrelements 4 anzeigt und nicht über eine Stirnfläche 32 des Elementkörpers 5 mit den Bohrungen 26 hinaus ragt. Somit steht die ganze Stirnfläche für die Befestigung von weiteren Anbauteilen zur Verfügung. Dabei kann die Schlitzschraube 27 (oder ein anderer Gewindebolzen mit Quermarkierung) im Zentrum eine weitere Befestigungsbohrung 28, ggf. ebenfalls mit Innengewinde, aufweisen. Das Anzeigeelement des Sperrelements 4 in Form der Schlitzschraube 27, die die Stellung des Sperrelements 4 an der Vorderseite anzeigt, ist hier folglich flächenbündig mit der die Bohrungen 26 aufweisenden Stirnfläche 32 eingebaut.

Die Ausführungsvarianten der Figuren 15 bis 25 zeigen somit ein (Sicherheits-) Befestigungselement 1 für ein Lochwandsystem LS, bei dem Befestigungselemente 1 in Lochwandöffnungen 3 eingeführt werden können, wobei sich bei diesen Befestigungselementen 1, durch Verdrehen eines Betätigungselements 6, ein Sperrelement 4 und ein Elementkörper 5 jeweils gegen eine Lochwand 2 festziehen können. Hierbei weist ein Befestigungselement mindestens ein Anzeigeelement auf, an dem man die tatsächliche Stellung des nach Einführen in eine Lochwandöffnung 3 nicht mehr sichtbaren Sperrelements 4 optisch und/oder haptisch ablesen kann. Das Anzeigeelement kann z.B. ein Gewindebolzen mit Quermarkierung oder eine Hammerkopfschraube 7 oder eine Schlitzschraube 27 sein. Wie vorstehend erläutert, kann dabei das Anzeigeelement mit dem Sperrelement fest verbunden sein (vgl. insbesondere (Figuren 17, 18 und 21).

Wie unter Bezugnahme auf die Figuren 17, 18 und 24 erläutert, kann das Anzeigeelement insbesondere ein Gewindebolzen mit Quermarkierung in Form einer Hammerkopfschraube 7 oder eine Schlitzschraube 27 umfassen. Ein elastisches Druckelement 19 kann hierbei in einer Querrichtung auf das jeweilige Gewinde mit einer mittels einer Andruckschraube 20 einstellbaren Kraft drücken, um zu gewährleisten, dass beim Drehen des Elementkörpers 5 auch das Sperrelement 4 und somit das Anzeigeelement gedreht wird.

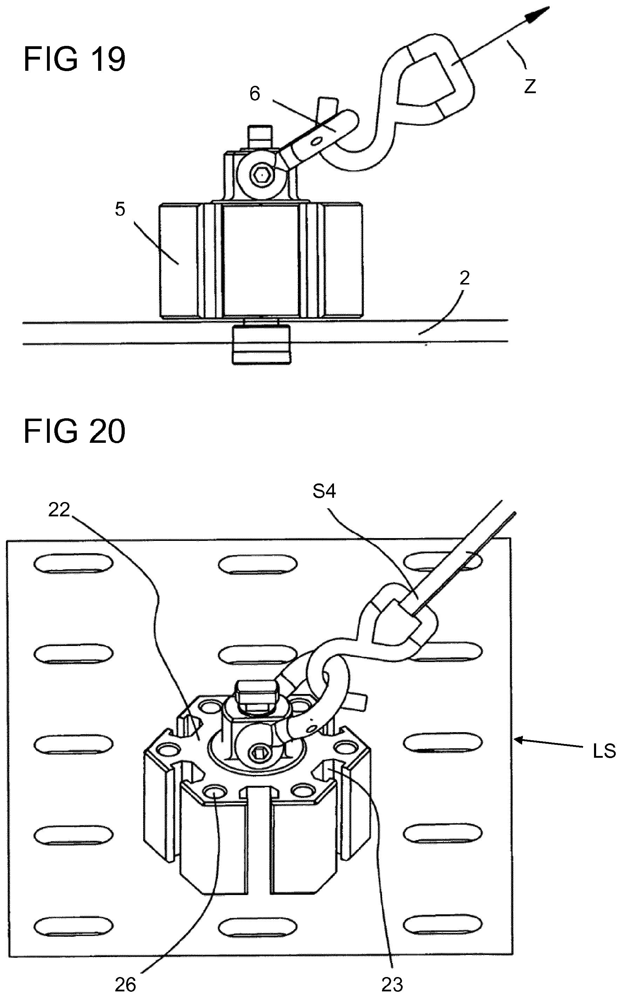

Ein ringförmiges Einhängeelement insbesondere in Form eines Schäkel-Bügels 6, der an dem Drehbolzen 10 mit zwei Gewindeschrauben 37, die in Vertiefungen 36 am Drehbolzen 10 enden, drehbar befestigt ist, dient ferner auch bei den Ausführungsvarianten der Figuren 15 bis 25 zum Einhängen von beispielsweise einem Spanngurt S4 oder ähnlichen Verzurrelementen (vgl. insbesondere Figuren 17, 20, und 21). Der Drehbolzen 10 ist hierbei um die Hammerkopfschraube 7 drehbar und kann sich somit der Richtung, aus der eine Zurrkraft Z kommt, auch hier anpassen (vgl. insbesondere Fig. 19 und 20. Des Weiteren ist der Drehbolzen 10 in einer Senkung 30 des Elementkörpers 5 eingelassen, um beim Verzurren seitlichen Kräften entgegen zu wirken.

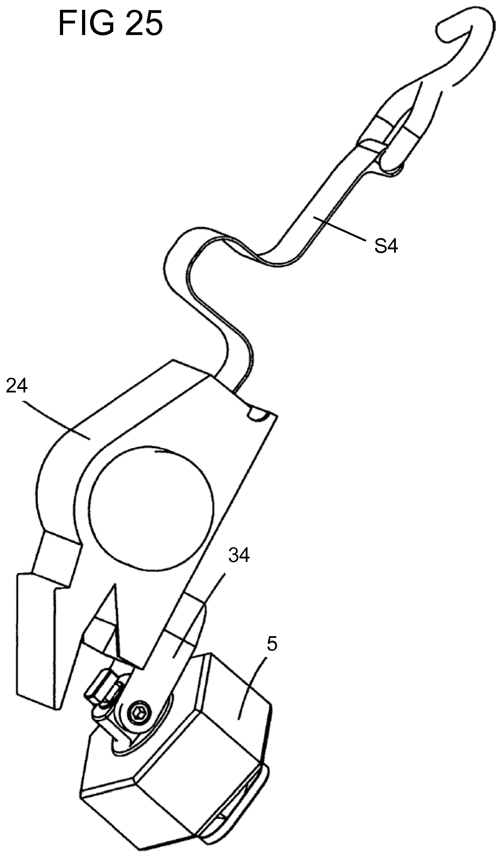

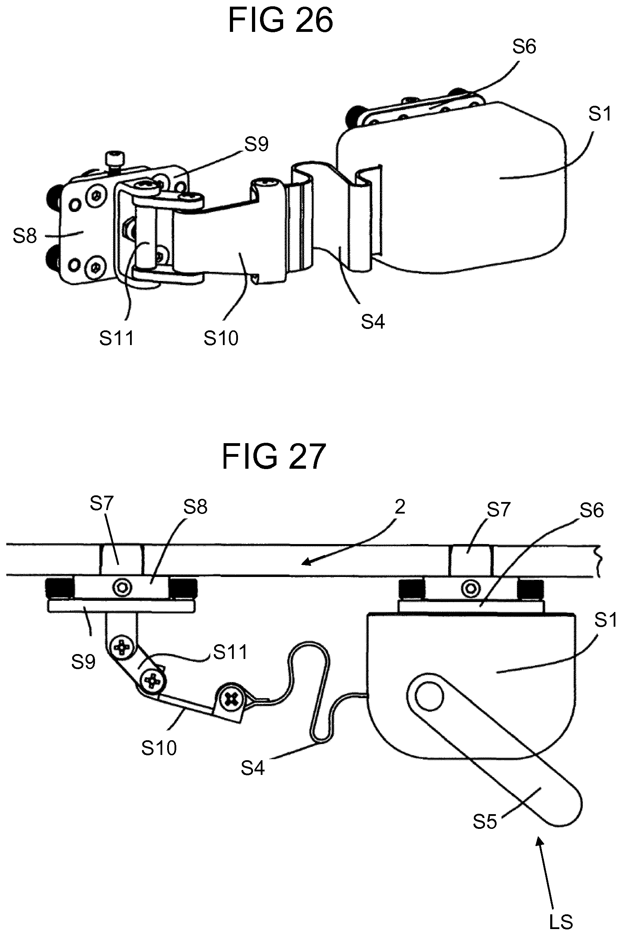

Statt eines Einhängeelements, wie dem Schäkel 6, kann in einer Weiterbildung gemäß der Figur 25 mittels eines an dem Elementkörper 5 fixierten Verbindungsstücks 34 ein kompletter Spanngurtapparat 24 angebaut werden. Dieser Spanngurtapparat 24 kann dann zusammen mit dem Befestigungselement 1 eine Spannvorrichtung für LochwandSysteme, eine sogenannte Gurt-Box, bilden. Eine solche Spannvorrichtung für ein Lochwandsystem LS ist exemplarisch in den nachfolgend erläuterten Figuren 26 bis 28 dargestellt.

Der Spanngurtapparat S1 der Figuren 26 bis 28 für ein Lochwandsystem LS der Figuren 1 bis 25 weist einen Spanngurt S4 mit Ratschenmechanismus S5 auf und ist direkt auf einer Adapterplatte S6 fixiert. Die Adapterplatte S6 weist eine Verbindungsvorrichtung S7 auf, welche direkt mit der Lochwand 2 oder einem Verbindungsstück 34 eines Befestigungselements 1 verbunden werden kann.

Der Spanngurtapparat S1 kann ferner eine Einhängevorrichtung S8 umfassen, die ebenfalls auf einer Adapterplatte S9 fixiert ist und eine drehbare und schwenkbare Einhängeöse S11 aufweist. Die Einhängeöse S11 erlaubt es, den abspulbaren Spanngurt S4 mittels eines Einhängebügels S10 formschlüssig einzuhängen. Der gesamte, dargestellte Spannvorrichtung besteht somit aus einem Spannelement oder Spanngurtapparat S1 mit Ratschenmechanismus S5, der auf einer Adapterplatte S6 fixiert ist, und einer Einhängevorrichtung S8, die auf einer Adapterplatte S9 fixiert ist. Diese spezielle Spannvorrichtung wird dabei vorliegend auch Gurt-Box genannt.

Mithilfe der Spannvorrichtung wird ein Spannvorgang für die Sicherung von Transportgut S3 denkbar einfach. Folgende, wenige Schritte sind auszuführen:
1. Transportgut S3 im Laderaum des Transportmittels positionieren,
2. Spanngurtapparat S1 an Lochwand 2 - ggf. mithilfe eines Befestigungselements 1 - positionieren und fixieren,
3. Einhängevorrichtung S8 an Lochwand 2 positionieren und fixieren.
4. Spanngurt S4 abspulen und Einhängebügel S10 formschlüssig am der Einhängeöse S11 einhängen, und
5. Ratschenmechanismus S5 betätigen, der den Spanngurt S4 anspannt, bis ausreichend Spannkraft anliegt und das Transportgut S3 ausreichend gesichert ist.

Beim Entsannen wird der Spanngurt S4 am Ratschenmechanismus S5 entspannt, der Einhängebügel S10 aus der Einhängeöse S11 ausgehängt und der Spanngurt S4 durch Federkraft des Ratschenmechanismus S5 aufgespult. Das Transportgut S3 ist wieder frei und kann aus dem Transportmittel entnommen werden. Der Spannvorgang kann hierbei auch durch Einsatz von einem elektrisch, hydraulisch oder rein durch Federkraft angetriebenen Mechanismus erfolgen.

Der Spanngurtapparat S1 und die Einhängevorrichtung S8 können jeweils bei NichtGebrauch an einem beliebigen Ort an der Lochwand 2 platzsparend positioniert werden.

Die in den Figuren 26 bis 28 dargestellte Spannvorrichtung für ein Lochwandsystem LS, die zur Sicherung von Transportgut in Transportmitteln mittels Spanngurten dient, weist ein spezielles Spannelement respektive einen Spanngurtapparat S1 auf, der auf einer Verbindungsvorrichtung S7 fixiert ist, mittels der der Spanngurtapparat S1 direkt mit jeder Lochwandöffnung 3 einer Lochwand 2 oder einem Befestigungselement 1 verbunden werden kann. Der Spanngurtapparat S1 kann hierbei drehbar auf der Verbindungsvorrichtung S7 gelagert sein, um einen Spanngurt S4 in alle erforderliche Richtungen spannen zu können.

Teil der Spannvorrichtung ist ferner eine Einhängevorrichtung S8, die ebenfalls direkt mit jeder Lochwandöffnung 3 einer Lochwand 2 2 oder einem Befestigungselement 1 verbunden werden kann. Die Einhängevorrichtung S8 kann hierbei eine drehbare und/oder schwenkbare Einhängeöse S11 aufweisen, die derart jede Position für die jeweilige gewünschte Spannrichtung einnehmen kann. Zum Einhängen an die Einhängöse S1 kann der Spanngurt S4 des Spanngurtapparates S1 einen Einhängebügel S10 umfassen.

### Bezugszeichenliste

- 1: Befestigungselement
- 10: Drehbolzen
- 11: Gewindebohrung des Elementkörpers
- 12: Anliegefläche des Elementkörpers
- 13: Gewindebohrung
- 14: Langseite des Sperrelements
- 16: Absatz des Sperrelements
- 17: Durchgangsbohrung des Drehbolzens
- 18: Weitere Gewindebohrung
- 19: Elastisches Druckelement
- 2: Lochwand
- 20: Andruckschraube
- 22: Gezogenes Aluminiumprofil
- 23: T-Nut
- 24: Spanngurtapparat
- 26: (Gewinde-) Bohrung
- 27: Schlitzschraube
- 28: Weitere Bohrung
- 3: Lochwandöffnung
- 30: Vertiefung / Senkung im Elementkörper
- 31: Quermarkierung / Schlitz
- 32: Stirnfläche
- 33: Geometrie des Absatzes
- 34: Verbindungsstück
- 35: Gewindehülse
- 36: Vertiefung am Drehbolzen
- 37: Gewindeschraube
- 3L: Längsseite der Langlochgeometrie
- 4: Sperrelement
- 40: Federpaket (Elastisches Element)
- 400: Tellerfeder
- 5: Elementkörper
- 50: Aussparung
- 6: Betätigungselement (Ringmutter / Schäkel)
- 6A: Bügelteil
- 6B: Querbolzen
- 6C: Stützabschnitt
- 7: Gewindebolzen / Hammerkopfschraube
- 7A: Querstift (Gewindebolzen zu Ringmutter)
- 7B: Federring
- 8: Langseite des Hammerkopfes
- 9: Querstift
- A: Stützfläche
- E: Ecke
- Q: Querstift (Gewindebolzen zu Elementkörper)
- R1, R2: Radius
- S1: Spanngurtapparat
- S10: Einhängebügel
- S11: Einhängeöse
- S3: Transportgut
- S4: Spanngurt
- S5: Ratschenmechanismus
- S6: Adapterplatte Spanngurtapparat
- S7: Verbindungsvorrichtung
- S8: Einhängevorrichtung
- S9: Adapterplatte Einhängevorrichtung
- T: Ausfräsung / Tasche
- V: Verstärkungsplättchen
- Z: Zurrkraft

## Patentansprüche

1. Lochwandsystem, mit
- einer Lochwand (2), die eine Vorderseite und eine Rückseite und mehrere Lochwandöffnungen (3) aufweist, und
- mindestens einem Befestigungselement (1) zur Befestigung an der Lochwand (2),
wobei das mindestens eine Befestigungselement (1) so ausgestaltet ist, dass durch einfaches Einsetzen und Verdrehen in die jeweilige Lochwandöffnung (3) eine feste und lösbare Verbindung zur Lochwand (2) hergestellbar ist,
wobei das mindestens eine Befestigungselement (1) einen Gewindebolzen (7), einen Elementkörper (5) und ein an dem Elementkörper (5) vorgesehenes Sperrelement (4) zur lösbaren Verbindung des Befestigungselements (1) mit der Lochwand (2) an besagter Lochwandöffnung (3) aufweist,
wobei der Elementkörper (5) von dem Gewindebolzen (7) durchdrungen ist und durch eine Betätigung des an der Vorderseite der Lochwand (2) zugänglichen Elementkörpers (5)
(a) das Sperrelement (4) drehbar und gegen die Rückseite der Lochwand (2) spannbar ist und
(b) der Elementkörper (5) gegen die Vorderseite der Lochwand (2) spannbar ist,
**dadurch gekennzeichnet, dass**
die Lochwandöffnungen (3) eine Langlochform aufweisen und das Sperrelement (4) für die Befestigung des Befestigungselements (1) durch die besagte Lochwandöffnung (3) ragt,
wobei das drehbare Sperrelement (4) so ausgestaltet ist, dass es formschlüssig in die jeweilige Lochwandöffnung (3) passt, und nach Einführen in die besagte Lochwandöffnung (3) in eine Position bewegbar ist, die ein Herausziehen aus der besagten Lochwandöffnung (3) nicht mehr zulässt,
wobei das Sperrelement (4) einen in besagter Lochwandöffnung (3) aufgenommenen Absatz (16) aufweist, der das Sperrelement (4) gegen eine Verdrehung in besagter Lochwandöffnung (3) um mehr als 90° sperrt,
wobei der Absatz (16) eine augenförmige Querschnittsfläche mit zwei sich gegenüberliegenden Radien (R1) und zwei sich gegenüberliegenden Ecken (E) aufweist,
wobei das Befestigungselement (1) ein Anzeigeelement (7, 27) aufweist, an dem die Stellung des nach Einführen in die Lochwandöffnung (3) an der Vorderseite der Lochwand (2) nicht sichtbaren Sperrelements (4) an der Vorderseite der Lochwand (2) visuell und/oder haptisch erkennbar ist,
wobei der Gewindebolzen (7) ein mit einem Innengewinde des Sperrelements (4) in Eingriff stehendes Außengewinde aufweist,
wobei der Gewindebolzen (7) zudem fest mit dem Sperrelement (4) verbunden ist und der Elementkörper (5) eine zentrale Gewindebohrung (11) aufweist, in die das Außengewinde des Gewindebolzens (7) eingreift, und
wobei ein elastisches Druckelement (19) an dem Elementkörper (5) vorgesehen ist, das in einer Querrichtung, die quer zu einer Längserstreckungsrichtung des Gewindebolzens (7) verläuft, auf das Außengewinde des Gewindebolzens (7) drückt, und das so ausgestaltet ist, dass bei einem Drehen des Elementkörpers (5) der Gewindebolzen (7), das Sperrelement (4) und das Anzeigeelement solange mitgedreht werden, bis das Sperrelement (4), bedingt durch die augenförmige Geometrie (33) des Absatzes (16), gegen einer Verdrehung in der besagten Lochwandöffnung (3) um mehr als 90° gesperrt ist und nach dem Sperren des Sperrelements (4) der Elementkörper (5) weiter drehbar ist, um das Sperrelement (4) gegen die Rückseite der Lochwand (2) und den Elementkörper (5) gegen die Vorderseite der Lochwand (2) zu spannen.

2. Lochwandsystem nach Anspruch 1, **dadurch gekennzeichnet, dass** der Elementkörper (5) mehrere T-Nuten (23) und/oder mehrere Bohrungen (26) für die Befestigung eines Gegenstandes und/oder Anbauteils an dem Elementkörper (5) aufweist.

3. Lochwandsystem nach Anspruch 2, **dadurch gekennzeichnet, dass** mehrere T-Nuten (23) und mehrere Bohrungen (26) an dem Elementkörper (5) vorgesehen sind und sich T-Nuten (23) und Bohrungen (26) entlang eines Umfangs des Elementkörpers (5) abwechseln, und/oder der Elementkörper (5) an einer der Lochwand (2) zugewandten Unterseite eine Aussparung (50) aufweist, an der das Sperrelement (4) von dem Elementkörper (5) vorsteht.

4. Lochwandsystem nach Anspruch 1,
**dadurch gekennzeichnet, dass** der
Elementkörper (5) mehrere Bohrungen (26) für die Befestigung eines Gegenstandes und/oder Anbauteils an dem Elementkörper (5) aufweist und das Anzeigeelement (27) flächenbündig mit einer Stirnseite des Befestigungselements (1) abschließt, an dem die mehreren Bohrungen (26) vorgesehen sind.

5. Lochwandsystem nach einem der vorhergehenden Ansprüche, **dadurch gekennzeichnet, dass** an dem Befestigungselement (1) ein Verbindungsstück (34) vorgesehen ist, an dem insbesondere ein kompletter Spanngurtapparat (24) befestigbar ist, und/oder das Lochwandsystem (LS) einen Spanngurtapparat (24, S1) mit einem aufspulbaren Spanngurt (S4) umfasst.

6. Lochwandsystem nach einem der vorhergehenden Ansprüche, **dadurch gekennzeichnet, dass** über das Befestigungselement (1) ein Bügelteil (6), ein Spanngurtapparat (24, S1) und/oder ein Einrichtungsgegenstand an der Lochwand (2) befestigt ist.

7. Fahrzeug, mit einem Lochwandsystem nach einem der vorhergehenden Ansprüche, wobei die Lochwand einen Teil einer Bodenverkleidung, Deckenverkleidung und/oder Wandverkleidung des Fahrzeugs bildet.

8. Befestigungselement zur Befestigung an einer Lochwand (2), mit einem Elementkörper (5), einem Gewindebolzen (7) und ein an dem Elementkörper (5) vorgesehenen und an einer Unterseite des Elementkörpers (5) vorstehenden Sperrelement (4) zur lösbaren Verbindung des Befestigungselements (1) mit der Lochwand (2) an einer langlochförmigen Lochwandöffnung (3), wobei das Befestigungselement (1) so ausgestaltet ist, dass durch einfaches Einsetzen und Verdrehen in die Lochwandöffnung (3) der Lochwand (2) eine feste und lösbare Verbindung zur Lochwand (2) hergestellbar ist,
wobei der Elementkörper (5) von dem Gewindebolzen (7) durchdrungen ist, und durch eine Betätigung des Elementkörpers (5)
(a) das Sperrelement (4) drehbar und gegen eine Rückseite der Lochwand (2) spannbar ist und
(b) der Elementkörper (5) gegen die Vorderseite der Lochwand (2) spannbar ist,
**dadurch gekennzeichnet, dass**
das Sperrelement (4) vorgesehen ist, für die Befestigung des Befestigungselements (1) an der Lochwand durch die Lochwandöffnung (3) zu ragen,
wobei das drehbare Sperrelement (4) so ausgestaltet ist, dass es formschlüssig in die Lochwandöffnung (3) passt, und nach Einführen in die Lochwandöffnung (3) in eine Position bewegbar ist, die ein Herausziehen aus der Lochwandöffnung (3) nicht mehr zulässt,
wobei das Sperrelement (4) einen in der Lochwandöffnung (3) aufzunehmenden Absatz (16) aufweist, der das Sperrelement (4) gegen einer Verdrehung in der Lochwandöffnung (3) um mehr als 90° sperrt,
wobei der Absatz (16) eine augenförmige Querschnittsfläche mit zwei sich gegenüberliegenden Radien (R1) und zwei sich gegenüberliegenden Ecken (E) aufweist,
wobei das Befestigungselement (1) ein Anzeigeelement (7, 27) aufweist, an dem die Stellung des nach Einführen in die Lochwandöffnung (3) an der Vorderseite der Lochwand (2) nicht sichtbaren Sperrelements (4) an der Vorderseite der Lochwand (2) visuell und/oder haptisch erkennbar ist,
wobei der Gewindebolzen (7) ein mit einem Innengewinde des Sperrelements (4) in Eingriff stehendes Außengewinde aufweist,
wobei der Gewindebolzen (7) zudem fest mit dem Sperrelement (4) verbunden ist und der Elementkörper (5) eine zentrale Gewindebohrung (11) aufweist, in die das Außengewinde des Gewindebolzens (7) eingreift, und
wobei ein elastisches Druckelement (19) an dem Elementkörper (5) vorgesehen ist, das in einer Querrichtung, die quer zu einer Längserstreckungsrichtung des Gewindebolzens (7) verläuft, auf das Außengewinde des Gewindebolzens (7) drückt, und das so ausgestaltet ist, dass bei einem Drehen des Elementkörpers (5) der Gewindebolzen (7), das Sperrelement (4) und das Anzeigeelement solange mitgedreht werden, bis das Sperrelement (4), bedingt durch die augenförmige Geometrie (33) des Absatzes (16), gegen einer Verdrehung in der Lochwandöffnung (3) um mehr als 90° gesperrt ist und nach dem Sperren des Sperrelements (4) der Elementkörper (5) weiter drehbar ist, um das Sperrelement (4) gegen die Rückseite der Lochwand (2) und den Elementkörper (5) gegen die Vorderseite der Lochwand (2) zu spannen.

## Claims

1. Perforated wall system, with
- a perforated wall (2) which comprises a front side and a rear side and a plurality of perforated wall openings (3), and
- at least one fastening element (1) for fastening to the perforated wall (2),
wherein the at least one fastening element (1) is designed such that a fixed and detachable connection to the perforated wall (2) can be produced by simply inserting and twisting it into the respective perforated wall opening (3),
wherein the at least one fastening element (1) comprises a threaded bolt (7), an element body (5) and a locking element (4) provided on the element body (5) for releasably connecting the fastening element (1) to the perforated wall (2) at said perforated wall opening (3),
wherein the element body (5) is penetrated by the threaded bolt (7) and by an actuation of the element body (5) accessible at the front side of the perforated wall (2)
(a) the locking element (4) is rotatable and tensionable against the rear side of the perforated wall (2), and
(b) the element body (5) is tensionable against the front side of the perforated wall (2),
**characterised in that**
the perforated wall openings (3) comprising the form of an elongated hole and the locking element (4) for fastening the fastening element (1) protrudes through said perforated wall opening (3),
wherein the rotatable blocking element (4) is designed such that it fits positively into the respective perforated wall opening (3) and, after insertion into said perforated wall opening (3), can be moved into a position which no longer allows it to be pulled out of said perforated wall opening (3),
wherein the locking element (4) comprises a shoulder (16) received in said perforated wall opening (3), which locks the locking element (4) against rotation in said perforated wall opening (3) by more than 90°,
wherein the shoulder (16) comprises an eye-shaped cross-sectional area with two opposing radii (R1) and two opposing corners (E),
wherein the fastening element (1) comprises a display element (7, 27) on which the position of the locking element (4), which is not visible on the front side of the perforated wall (2) after insertion into opening (3) in the perforated wall, is visually and/or haptically detectable at the front side of the perforated wall (2),
wherein the threaded bolt (7) comprises an external thread engaging with an internal thread of the locking element (4),
wherein the threaded bolt (7) is also firmly connected to the locking element (4) and the element body (5) comprises a central threaded bore (11) in which the external thread of the threaded bolt (7) engages, and
wherein an elastic pressure element (19) is provided on the element body (5) which presses in a transverse direction, which extends transversely to a longitudinal extension direction of the threaded bolt (7), onto an external thread of the threaded bolt (7) in order to ensure that when the element body (5) is rotated, the locking element (4) and the display element are rotated until the locking element (4) is locked against rotation in the said perforated wall opening (3) by more than 90° due to the eye-shaped geometry (33) of the shoulder (16), and, after locking the locking element (4), the element body (5) can be rotated further in order to clamp the locking element (4) against the rear side of the perforated wall (2) and the element body (5) against the front side of the perforated wall (2).

2. Perforated wall system according to claim 1, **characterised in that** the element body (5) comprises multiple T grooves (23) and/or multiple bores (26) for fastening an object and/or attachment part to the element body (5).

3. Perforated wall system according to claim 2, **characterised in that** the multiple T grooves (23) and the multiple bores (26) are provided on the element body (5) and the T grooves (23) and bores (26) alternate along a circumference of the element body (5), and/or element body (5) comprises, on a bottom side facing the perforated wall (2), a recess (50) at which the locking element (4) protrudes from the element body (5).

4. Perforated wall system according to claim 1, **characterised in that** the element body (5) comprises multiple bores (26) for fastening an object and/or attachment part to the element body (5) and the display element (27) is flush with an end face of the fastening element (1) on which the multiple bores (26) are provided.

5. Perforated wall system according to one of the preceding claims, **characterised in that** a connecting piece (34) is provided on the fastening element (1), to which in particular a complete tensioning strap apparatus (24) can be fastened, and/or the perforated wall system (LS) comprises a tensioning strap apparatus (24, S1) with a windable tensioning strap (S4).

6. Perforated wall system according to one of the preceding claims, **characterised in that** a bracket part (6), a tensioning strap apparatus (24, S1) and/or a fixture is fastened to the perforated wall (2) via the fastening element (1).

7. Vehicle, with a perforated wall system according to one of the preceding claims, wherein the perforated wall forms part of a floor panelling, ceiling panelling and/or wall panelling of the vehicle.

8. Fastening element for fastening to a perforated wall (2), comprising an element body (5), a threaded bolt (7) and a locking element (4) provided on the element body (5) and protruding from a bottom side of the element body (5) for releasably connecting the fastening element (1) to the perforated wall (2) at an elongate perforated wall opening (3), wherein the fastening element (1) is designed such that a fixed and detachable connection to the perforated wall (2) can be produced by simply inserting and twisting it into the perforated wall opening (3) of the perforated wall (2),
wherein the element body (5) is penetrated by the threaded bolt (7), and by actuation of the element body (5)
(a) the locking element (4) is rotatable and tensionable against a rear side of the perforated wall (2), and
(b) the element body (5) is tensionable against the front side of the perforated wall (2),
**characterised in that**
the locking element (4) is set up, for the fastening of the fastening element (1), to project through the opening (3) in the perforated wall to protrude from a rear side of the perforated wall (2),
wherein the rotatable locking element (4) is designed such that it fits positively into the perforated wall opening (3) and, after insertion into the perforated wall opening (3), can be moved into a position which no longer allows it to be pulled out of the perforated wall opening (3),
wherein the locking element (4) comprises a shoulder (16) to be received in the perforated wall opening (3), which locks the locking element (4) against rotation in the perforated wall opening (3) by more than 90°,
wherein the shoulder (16) comprises an eye-shaped cross-sectional area with two opposing radii (R1) and two opposing corners (E),
wherein the fastening element (1) comprises a display element (7, 27) on which the position of the locking element (4), which is not visible on the front side of the perforated wall (2) after insertion into opening (3) in the perforated wall, is visually and/or haptically detectable at the front side of the perforated wall (2),
wherein the threaded bolt (7) comprises an external thread engaging with an internal thread of the locking element (4),
wherein the threaded bolt (7) is also firmly connected to the locking element (4) and the element body (5) comprises a central threaded bore (11) in which the external thread of the threaded bolt (7) engages, and
wherein an elastic pressure element (19) is provided on the element body (5) which presses in a transverse direction, which extends transversely to a longitudinal extension direction of the threaded bolt (7), onto an external thread of the threaded bolt (7) in order to ensure that when the element body (5) is rotated, the locking element (4) and the display element are rotated until the locking element (4) is locked against rotation in the said perforated wall opening (3) by more than 90° due to the eye-shaped geometry (33) of the shoulder (16), and, after locking the locking element (4), the element body (5) can be rotated further in order to clamp the locking element (4) against the rear side of the perforated wall (2) and the element body (5) against the front side of the perforated wall (2).

## Revendications

1. Système de paroi perforée, avec
- une paroi perforée (2), qui présente une face avant et une face arrière et plusieurs ouvertures de paroi perforée (3), et
- au moins un élément de fixation (1) pour la fixation à la paroi perforée (2),
l'au moins un élément de fixation (1) étant conçu de telle sorte qu'une liaison fixe et amovible avec la paroi perforée (2) peut être établie par simple insertion et rotation dans l'ouverture respective de la paroi perforée (3),
dans lequel l'au moins un élément de fixation (1) comprend un boulon fileté (7), un corps d'élément (5) et un élément de blocage (4) prévu sur le corps d'élément (5) pour relier de manière amovible l'élément de fixation (1) à la paroi perforée (2) au niveau de ladite ouverture de paroi perforée (3),
le corps d'élément (5) étant traversé par le boulon fileté (7) et par un actionnement du corps d'élément (5) accessible à l'avant de la paroi perforée (2)
(a) l'élément de blocage (4) pouvant être tourné et serré contre la face arrière de la paroi perforée (2) et
(b) le corps d'élément (5) pouvant être serré contre la face avant de la paroi perforée (2),
**caractérisé en ce que**
les ouvertures de paroi perforée (3) ont une forme de trou allongé et l'élément de blocage (4) pour la fixation de l'élément de fixation (1) traverse ladite ouverture de paroi perforée (3),
dans lequel l'élément de blocage (4) qui peut être tourné est conçu de telle sorte qu'il rentre par complémentarité de forme dans l'ouverture respective (3) de paroi perforée et, après introduction dans ladite ouverture (3) de paroi perforée, peut être amené dans une position qui ne permet plus une extraction hors de ladite ouverture (3) la paroi perforée,
dans lequel l'élément de blocage (4) comprend un épaulement (16) reçu dans ladite ouverture de paroi perforée (3), qui bloque l'élément de blocage (4) contre une rotation dans ladite ouverture de paroi perforée (3) de plus de 90°,
dans lequel l'épaulement (16) présente une surface de section transversale en forme d'un oeil avec deux rayons opposés (R1) et deux coins opposés (E),
l'élément de fixation (1) présentant un élément indicateur (7, 27) sur lequel la position de l'élément de blocage (4) non visible sur la face avant de la paroi perforée (2) après introduction dans l'ouverture de la paroi perforée (3) peut être reconnu visuellement et/ou haptiquement sur la face avant de la paroi perforée (2),
dans lequel le boulon fileté (7) présente un filetage extérieur étant en prise avec un filetage intérieur de l'élément de blocage (4)
le boulon fileté (7) étant en outre relié de manière fixe à l'élément de blocage (4) et le corps d'élément (5) présentant un trou taraudé central (11) dans lequel s'engage le filetage extérieur du boulon fileté (7), et
dans lequel un élément de pression élastique (19) est prévu sur le corps d'élément (5), qui appuie sur le filetage extérieur du boulon fileté (7) dans une direction transversale qui s'étend transversalement à une direction d'extension longitudinale du boulon fileté (7), et qui est conçu de telle sorte que, lors d'une rotation du corps d'élément (5), le boulon fileté (7), l'élément de blocage (4) et l'élément indicateur sont entraînés en rotation, jusqu'à ce que l'élément de blocage (4), en raison de la géométrie en forme d'un oeil (33) de l'épaulement (16), soit bloqué contre une rotation de plus de 90° dans ladite ouverture de paroi perforée (3) et, après le blocage de l'élément de blocage (4), le corps d'élément (5) peut continuer à tourner pour serrer l'élément de blocage (4) contre la face arrière de la paroi perforée (2) et le corps d'élément (5) contre la face avant de la paroi perforée (2).

2. Système de paroi perforée selon la revendication 1, **caractérisé en ce que** le corps d'élément (5) présente plusieurs rainures en T (23) et/ou plusieurs alésages (26) pour la fixation d'un objet et/ou d'une pièce à monter sur le corps d'élément (5).

3. Système de paroi perforée selon la revendication 2, **caractérisé en ce que** plusieurs rainures en T (23) et plusieurs alésages (26) sont prévus sur le corps d'élément (5) et les rainures en T (23) et les alésages (26) alternent le long d'une périphérie du corps d'élément (5), et/ou le corps d'élément (5) présente sur une face inférieure tournée vers la paroi perforée (2) un évidement (50) au niveau duquel l'élément de blocage (4) fait saillie du corps d'élément (5).

4. Système de paroi perforée selon la revendication 1, **caractérisé en ce que** le corps d'élément (5) présente plusieurs alésages (26) pour la fixation d'un objet et/ou d'une pièce à monter sur le corps d'élément (5) et **en ce que** l'élément indicateur (27) se termine à fleur d'une face frontale de l'élément de fixation (1) sur lequel sont prévus les plusieurs alésages (26).

5. Système de paroi perforée selon l'une quelconque des revendications précédentes, **caractérisé en ce qu'**une pièce de liaison (34) est prévue sur l'élément de fixation (1) à laquelle peut être fixé en particulier un appareil de sangle de serrage complet (24), et/ou le système de paroi perforée (LS) comprend un appareil de sangle de serrage (24, S1) avec une sangle de serrage (S4) pouvant être enroulée.

6. Système de paroi perforée selon l'une quelconque des revendications précédentes, **caractérisé en ce qu'**une pièce d'étrier (6), un appareil de sangle de serrage (24, S1) et/ou un objet d'aménagement est fixé à la paroi perforée (2) par l'intermédiaire de l'élément de fixation (1).

7. Véhicule, avec un système de paroi perforée selon l'une quelconque des revendications précédentes, dans lequel la paroi perforée forme une partie d'un revêtement de plancher, d'un revêtement de plafond et/ou d'un revêtement de paroi du véhicule.

8. Elément de fixation pour la fixation sur une paroi perforée (2), avec un corps d'élément (5), un boulon fileté (7) et un élément de blocage (4) prévu sur le corps d'élément (5) et faisant saillie sur une face inférieure du corps d'élément (5) pour la liaison amovible de l'élément de fixation (1) avec la paroi perforée (2) au niveau d'une ouverture de paroi perforée (3) en forme de trou allongé, l'élément de fixation (1) étant conçu de telle sorte que, par simple insertion et rotation dans l'ouverture de paroi perforée (3) de la paroi perforée (2), une liaison fixe et amovible peut être établie avec la paroi perforée (2),
le corps d'élément (5) étant traversé par le boulon fileté (7), et par un actionnement du corps d'élément (5)
(a) l'élément de blocage (4) pouvant être tourné et serré contre une face arrière de la paroi perforée (2) et
(b) le corps d'élément (5) pouvant être serré contre la face avant de la paroi perforée (2),
**caractérisé en ce que**
l'élément de blocage (4) est prévu pour traverser l'ouverture de paroi perforée (3) pour la fixation de l'élément de fixation (1) sur la paroi perforée,
l'élément de blocage (4) qui peut être tourné étant conçu de telle sorte qu'il rentre par complémentarité de forme dans l'ouverture (3) de paroi perforée, et qu'après introduction dans l'ouverture (3) de paroi perforée, il puisse être amené dans une position qui ne permet plus de le retirer de l'ouverture (3) de paroi perforée,
dans lequel l'élément de blocage (4) comprend un épaulement (16) destiné à être reçu dans l'ouverture de paroi perforée (3), l'épaulement qui bloque l'élément de blocage (4) contre une rotation dans l'ouverture de paroi perforée (3) de plus de 90°,
dans lequel l'épaulement (16) présente une surface de section transversale en forme d'un oeil avec deux rayons opposés (R1) et deux coins opposés (E),
l'élément de fixation (1) présentant un élément indicateur (7, 27) sur lequel la position de l'élément de blocage (4) non visible sur la face avant de la paroi perforée (2) après introduction dans l'ouverture de paroi perforée (3) peut être reconnu visuellement et/ou haptiquement sur la face avant de la paroi perforée (2),
dans lequel le boulon fileté (7) présente un filetage extérieur étant en prise avec un filetage intérieur de l'élément de blocage (4),
le boulon fileté (7) étant en outre solidaire de l'élément de blocage (4) et le corps d'élément (5) présentant un trou taraudé central (11) dans lequel s'engage le filetage extérieur du boulon fileté (7), et
un élément de pression élastique (19) étant prévu sur le corps d'élément (5), qui appuie sur le filetage extérieur du boulon fileté (7) dans une direction transversale qui s'étend transversalement à une direction d'extension longitudinale du boulon fileté (7), et qui est conçu de telle sorte que, lors d'une rotation du corps d'élément (5), le boulon fileté (7), l'élément de blocage (4) et l'élément indicateur sont entraînés en rotation, jusqu'à ce que l'élément de blocage (4) soit bloqué, en raison de la géométrie en forme d'un oeil (33) de l'épaulement (16), contre une rotation de plus de 90° dans l'ouverture de paroi perforée (3) et, après le blocage de l'élément de blocage (4), le corps d'élément (5) peut continuer à tourner pour serrer l'élément de blocage (4) contre la face arrière de la paroi perforée (2) et le corps d'élément (5) contre la face avant de la paroi perforée (2).
